# EUROPEAN PATENT SPECIFICATION

(11) **EP 4 503 471 B1**
(45) Date of publication and mention of the grant of the patent: **30.09.2026**
(21) Application number: 23189346.2
(22) Date of filing: 02.08.2023
(51) Int. Cl.: H04B 7/185, H04B 7/204

(54) **METHOD FOR PROVIDING RADIO COVERAGE TO USER EQUIPMENTS OF OR CONNECTED TO A MOBILE COMMUNICATION NETWORK BY MEANS OF A NON-TERRESTRIAL ANTENNA ENTITY OR FUNCTIONALITY, SYSTEM, PROGRAM AND COMPUTER-READABLE MEDIUM**
VERFAHREN ZUR BEREITSTELLUNG EINER FUNKABDECKUNG FÜR BENUTZERGERÄTE EINES ODER MIT EINEM MOBILKOMMUNIKATIONSNETZ VERBUNDENEN MOBILKOMMUNIKATIONSNETZES MITTELS EINER NICHTTERRESTRISCHEN ANTENNENENTITÄT ODER -FUNKTIONALITÄT, SYSTEM, PROGRAMM UND COMPUTERLESBARES MEDIUM
PROCÉDÉ DE FOURNITURE D'UNE COUVERTURE RADIO À DES ÉQUIPEMENTS UTILISATEURS D'UN RÉSEAU DE COMMUNICATION MOBILE OU CONNECTÉS À CELUI-CI AU MOYEN D'UNE ENTITÉ OU FONCTIONNALITÉ D'ANTENNE NON TERRESTRE, SYSTÈME, PROGRAMME ET SUPPORT LISIBLE PAR ORDINATEUR

(43) Date of publication of application: 05.02.2025
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2022/006820
- WO-A1-2022/029719
- WO-A1-2022/216410
- KR-A- 20160 143 509
- US-A1- 2022 052 756

## Description

### BACKGROUND

The present invention relates a method for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- regarding at least a first part of the radio beams, each one of the radio beams is able to transmit a different physical cell identity information in its specific part of the total field of view at least compared, respectively, to its adjacent or neighboring radio beams, resulting in the antenna entity or functionality realizing smaller radio cells and an increased number thereof regarding the first part of the radio beams and/or such that
-- regarding at least a second part of the radio beams, two or more radio beams are able to be grouped in order to transmit the same physical cell identity information in the combination of their contiguous specific parts of the total field of view, resulting in the antenna entity or functionality realizing larger radio cells and a smaller number thereof regarding the second part of the radio beams.

Furthermore, the present invention relates to a system or mobile communication network for providing radio coverage to user equipments of or connected to the mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS).
Such non-terrestrial networks are able to provide global cellular connectivity to handheld devices or user equipments, typically using satellite or HAP coverage, with earth-moving beams to provide radio coverage in a moving geographical area (earth-moving radio cell), that is moving, relative to the earth's surface, essentially together with the movement of the satellite (or the high-altitude platform device), i.e. especially together with the movement of the non-terrestrial antenna entities or functionalities aboard of such satellites and/or HAPs.

In terrestrial mobile communication networks, the typical approach for providing radio coverage to a certain geographic area and/or to a certain number of user equipments is by means of using base station entities that are typically stationary and wherein each base station entity serves a radio cell (or a plurality of radio cells) that is (are) likewise typically rather stationary. Of course, in case that a plurality of such base station entities are required - e.g. in view of a larger geographic area to be covered and/or in view of a higher (peak) demand for mobile communication services to be provided - a plurality of such mostly stationary base station entities are used, again, each one serving a radio cell (or a plurality of radio cells) that is (are) likewise typically rather stationary, i.e. each radio cell (or, the corresponding geographical area) is likewise rather stationary, and regarding a mobile user or user equipment that is geographically moving sufficiently to leave one (rather stationary) radio cell and to enter another (rather stationary) radio cell there will be the need to perform a handover procedure, at least in case a user equipment is considered that is currently in a certain mode of operation, such as connected mode.
Hence, handover procedures are required to be performed in case of any such movements of such mobile users or user equipments relative to the (rather stationary) radio cells provided by the (rather stationary) base station entities of typical terrestrial mobile communication networks.

Regarding non-terrestrial networks, the same principle applies: whenever the respective radio cell of a mobile station or user equipment changes radio cell boundaries (due to movements of such mobile users or user equipments, or - rather, in case of using non-terrestrial antenna entities or functionalities - due to earth-moving beams of such non-terrestrial antenna entities or functionalities) a handover needs to happen - again at least in case the user equipment considered is currently in a certain mode of operation, such as connected mode. However, performing handover procedures is costly (not only in terms of energy used, e.g. for performing, especially radiofrequency, measurements, or for transmitting and/or receiving additional radiofrequency signals, or for performing processing, but also in terms of additional overhead communications required, and, hence, associated usage of limited air interface capacity), not only for the user equipment involved as well as for the base station entity involved, but also - more generally and also as a consequence thereof - for the considered mobile communication network.
In a typical non-terrestrial network deployment, antenna entities or functionalities (typically aboard of satellites) are used generating or creating quite a huge number of individual (radio coverage) beams, or spot beams, per satellite (or per antenna entity or functionality) - e.g. at least 100 to 500 spot beams, or even well beyond, e.g. using more than 1000 or 2000 spot beams.
Typically, such antenna entities or functionalities (or satellites) are able to be used such that each of its spot beams in terms of mobile communication networks provides a distinct (radio) cell which is identified uniquely by a (different or distinct) physical cell identity, PCI. Alternatively multiple spot beams are also able to be combined by means of using the same physical cell identity (or physical cell identity information), i.e. to form larger radio cells. Document WO2022/006820A1 discloses a method for providing radio coverage to user equipments of or connected to a mobile communication network by means of a non-terrestrial antenna entity or functionality being part of a radio access network of the mobile communication network.

### SUMMARY

An object of the present invention is to provide a technically simple, effective and cost-effective solution for providing radio coverage to user equipments of or connected to a mobile communication network by means of a non-terrestrial antenna entity or functionality being part of a radio access network of the mobile communication network, wherein such provision of radio coverage is realized using a plurality of different radio beams of the antenna entity or functionality in a flexible manner and in a manner adapted to, or, at least, taking into account, the radio coverage requirements of the respective geographical area corresponding to the field of view of the respective antenna entity or functionality. The present invention is defined by the appended claims.

The object of the present invention is achieved by a method for providing radio coverage to user equipments of or connected to a mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- regarding at least a first part of the radio beams, each one of the radio beams is able to transmit a different physical cell identity information in its specific part of the total field of view at least compared, respectively, to its adjacent or neighboring radio beams, resulting in the antenna entity or functionality realizing smaller radio cells and an increased number thereof regarding the first part of the radio beams and/or such that
-- regarding at least a second part of the radio beams, two or more radio beams are able to be grouped in order to transmit the same physical cell identity information in the combination of their contiguous specific parts of the total field of view, resulting in the antenna entity or functionality realizing larger radio cells and a smaller number thereof regarding the second part of the radio beams,
wherein in order to provide radio coverage to different geographic areas and corresponding user equipments being located or moving there, the method comprises the step of operating the antenna entity or functionality such that the definition of the first and second parts of the radio beams, and, regarding the second part of the radio beams also the group size, is dynamically adapted in dependency of the geographical area currently covered by the respective radio beams.

It is thereby advantageously possible, according to the present invention, to be able to adapt the configuration of the radio beams of antenna entities or functionalities in a flexible manner such that the non-terrestrial radio access network is able to provide sufficient network (or air interface) capacity (by means of reducing the sizes of radio cells - up until using individual radio (spot) beams) - and nevertheless provide for large(r) radio cells in geographical areas of lower network capacity demand such as to be able to save resources, especially energy resources on the side of the non-terrestrial radio access network, but, thereby, typically also be able to reduce the number of handovers required by user equipments or mobile stations served and located in such geographical areas (and thereby, at least potentially, reduce their energy consumption. Reducing the number, or the rate of handover procedures (that would otherwise have been required), of course, also advantageously reduces the risk that a connection is lost (due to the handover not being successful); furthermore, all procedures related to performing a handover that is able to be avoided can also be avoided, e.g. related neighbor cell planning and configuration as part of planning and operational tasks.
According to the present invention, by means of using larger radio cells in geographical areas of lower communication demand, it is advantageously possible to avoid all these planning, configuration and execution aspects (regarding avoided handover procedures).

In known satellites or antenna entities or functionalities, it is known to use a large number of spot beams or radio beams (e.g. 100 to 500, or even more than 1000 or 2000 spot beams); one option is to use a configuration where the number of spot beams is not changed on the "projection area" (i.e. the total field of view) on the ground but the grouping or the geometrical shape does, hence differently shaped coverage areas are able to be realized; with steerable beams of currently known satellite generations including low earth orbit satellites, it is also possible to form different coverage areas. According to the present invention, it is possible to use each radio beam or spot beam individually, i.e. such that it provides a distinct radio cell (being identified uniquely by a physical cell identity (information)); alternatively, it is also possible to combine multiple radio beams or spot beams such as to form larger radio cells (or larger combined beams) in order to save resources and energy. According to the present invention, it is especially advantageously possible to adapt such radio beam configurations in a manner dependent on the requirements of user equipments or mobile stations (especially their density or communication requirements) in specific geographical areas, and to control the serving antenna entities or functionalities accordingly, i.e. modify the number of beam configurations (both in shape and time).

According to the present invention, user equipments of or connected to a mobile communication network shall be provided with radio coverage by a non-terrestrial radio access network in an efficient manner (especially both regarding efficiency of the non-terrestrial radio access network and/or of its components, especially antenna entities or functionalities and/or base station entities, and regarding user equipments or mobile stations). In this respect, a non-terrestrial antenna entity or functionality - being part of the (non-terrestrial) radio access network of the mobile communication network, and having a certain total field of view - provides radio coverage in different geographical areas during different time periods as it orbits the earth. The antenna entity or functionality realizes a plurality of different radio beams (or spot beams), wherein each of these radio beams covers a specific part of the total field of view.
The antenna entity or functionality is able to be configured in a manner such that individual radio beams generate (or provide) radio cells (first part of the radio beams, each one of such radio beams being, thus, able to transmit a different physical cell identity information in its specific part of the total field of view at least compared, respectively, to its adjacent or neighboring radio beams (or neighboring group of radio beams); thus smaller radio cells are realized and an increased number thereof generated) or in a manner such that radio beams are (contiguously) grouped to form (contiguous) larger radio cells (second part of the radio beams, two or more radio beams are grouped in order for all such radio beams transmitting the same physical cell identity information in the combination of their contiguous specific parts of the total field of view; thus larger radio cells are realized and a reduced number thereof generated). According to the present invention, radio coverage is provided in or to different geographic areas (and the corresponding user equipments located or moving there) in a manner such that the antenna entity or functionality is operated - by means of varying or adapting the size of the groups of radio beams, and, hence, the size of the generated radio cells, in dependency of the geographical area currently covered by the respective radio beams, especially in dependency of the communication requirements of user equipments located there. Hence, the definition of the first and second parts of the radio beams (i.e. which radio beams belong to the first part and which belong to the second part), and, regarding the second part of the radio beams, also the group size, is dynamically adapted in dependency of the currently covered geographical area, especially in terms of its population density (hence communication requirements or demand).

In conventionally known mobile communication networks using non-terrestrial radio access networks, the high number of spot beams of currently used satellites (which is there for capacity reasons) is often not needed - e.g. when used over unpopulated areas or especially over the sea.
According to the present invention, the transmission of so many radio beams is avoided in such situations which also provides benefits in terms of reduced radiation and lowered energy consumption on the satellite, especially in case of regenerative payload within the base station entity or gNB (or at least the gNB distributed unit) on the satellite. Hence, according to the present invention, it is advantageously possible to configure the radio beams and the related per beam processing capacity depending on the expected area capacity. Furthermore, in case that earth moving radio cells are used in such areas, it is also beneficial for the connected devices on the ground (i.e. user equipments) in these areas to be kept on a particular radio cell for an extended time, as, in this case, all the mobility procedures occur less often, which is especially relevant and beneficial for internet-of-things devices with constrained battery capacity. For regenerative payload on low earth orbit satellites, this has also a positive benefit on the required backhaul (feeder link), in inter-satellite links and teleports capacity and the related processing requirements.

The present invention is focused on low earth orbit (LEO) satellites or high altitude platform entities which typically are located up to 300 km until 1500 km above ground (especially 400 km to 1000 km), and are, typically, traveling at a velocity of around 7 km/s, resulting in a round trip time about the globe of typically about 100 minutes.

According to the present invention, it is advantageously possible and preferred that the antenna entity or functionality is operated such that
-- a radio beam configuration - as well as a distribution of the physical cell identity information among different radio beams - according to the first part of the radio beams is applied above a geographical area requiring a comparatively high data transmission capacity and/or a comparatively high number of user equipments to be served,
-- whereas a radio beam configuration - as well as a distribution of the physical cell identity information among different radio beams - according to the second part of the radio beams is applied above a geographical area requiring a lower data transmission capacity and/or a lower number of user equipments to be served, wherein, especially, the group size of grouped radio beams increases the lower the data transmission capacity requirements are and/or the lower the number of user equipments to be served within the respective geographical area.

It is thereby advantageously possible to realize and implement the inventive method in a comparatively simple and efficient manner.

According to the present invention, it is advantageously furthermore possible and preferred that, regarding the second part of the radio beams, the radio beams are grouped in a manner according to at least one of the following possibilities:
-- the radio beams are grouped such that such a group of radio beams extends parallel to the direction of movement of the antenna entity or functionality and, in a direction substantially orthogonal to the direction of movement of the antenna entity or functionality, covers the whole extension of the antenna entity or functionality,
-- the radio beams are grouped such that such a group of radio beams extends substantially parallel to the direction of movement of the antenna entity or functionality and, in the direction substantially orthogonal to the direction of movement of the antenna entity or functionality, covers a first part of the extension of the antenna entity or functionality, and that at least one further group of radio beams also extends substantially parallel to the direction of movement of the antenna entity or functionality and, in the direction substantially orthogonal to the direction of movement of the antenna entity or functionality, covers a second part of the extension of the antenna entity or functionality, wherein especially the first part and the second part of the extension of the antenna entity or functionality are adjacent in the direction substantially orthogonal to the direction of movement of the antenna entity or functionality,
wherein especially, with the movement of the antenna entity or functionality above the earth, such groups of radio beams are progressively extended or enlarged, parallel to the direction of movement of the antenna entity or functionality, such as to provide, as long as possible and regarding a specific geographical area, radio coverage using the same or a stationary physical cell identity information.

It is thereby advantageously possible to realize and implement the inventive method in a comparatively simple and efficient manner.

According to the present invention, it is furthermore advantageously possible and preferred that the radio coverage is provided using a regenerative payload deployment such that the antenna entity or functionality comprises or is integrated with a base station entity being part of the radio access network, wherein the antenna entity or functionality comprises or is integrated with at least a distributed unit of the base station entity.

It is thereby advantageously possible to realize and implement the inventive method in a comparatively simple and efficient manner.

According to the present invention, it is furthermore advantageously possible and preferred that the antenna entity or functionality is or corresponds to or is integrated with a satellite.

It is thereby advantageously possible to realize and implement the inventive method in a comparatively simple and efficient manner.

Furthermore, it is advantageously possible and preferred according to the present invention that the antenna entity or functionality comprises a first part and a second part, wherein the first part of the antenna entity or functionality corresponds to or is located on a first satellite and the second part of the antenna entity or functionality corresponds to or is located on a second satellite, wherein the first and second parts of the antenna entity or functionality together realize the different radio beams, wherein two or more radio beams, and at least one radio beam being generated by the first part of the antenna entity or functionality and at least one radio beam being generated by the second part of the antenna entity or functionality are grouped in order to transmit the same physical cell identity information in the combination of their respective specific parts of the total field of view.

It is thereby advantageously possible to realize and implement the inventive method in a comparatively simple and efficient manner.

Furthermore, the present invention relates to a system or to a mobile communication network for providing radio coverage to user equipments of or connected to the mobile communication network by means of a non-terrestrial antenna entity or functionality being part of a radio access network of the mobile communication network, wherein the radio coverage is provided in different geographical areas during different time periods by means of the antenna entity or functionality orbiting the earth and having a certain total field of view, wherein the antenna entity or functionality realizes a plurality of different radio beams, each of these radio beams covering a specific part of the total field of view, wherein the antenna entity or functionality is able to be configured such that:
-- regarding at least a first part of the radio beams, each one of the radio beams is able to transmit a different physical cell identity information in its specific part of the total field of view at least compared, respectively, to its adjacent or neighboring radio beams, resulting in the antenna entity or functionality realizing smaller radio cells and an increased number thereof regarding the first part of the radio beams and/or such that
-- regarding at least a second part of the radio beams, two or more radio beams are able to be grouped in order to transmit the same physical cell identity information in the combination of their contiguous specific parts of the total field of view, resulting in the antenna entity or functionality realizing larger radio cells and a smaller number thereof regarding the second part of the radio beams,
wherein in order to provide radio coverage to different geographic areas and corresponding user equipments being located or moving there, the system or mobile communication network is configured such that the definition of the first and second parts of the radio beams, and, regarding the second part of the radio beams also the group size, is dynamically adapted in dependency of the geographical area currently covered by the respective radio beams.

Additionally, the present invention relates to a program comprising a computer readable program code which, when executed on a computer and/or on a user equipment and/or on a network node of a mobile communication network, especially the antenna entity or functionality, or in part on a user equipment and/or in part on the network node of the mobile communication network, especially the antenna entity or functionality, causes the computer and/or the user equipment and/or the network node of the mobile communication network, especially the antenna entity or functionality to perform the inventive method.

Still additionally, the present invention relates to a computer-readable medium comprising instructions which when executed on a computer and/or on a user equipment and/or on a network node of a mobile communication network, especially the antenna entity or functionality, or in part on a user equipment and/or in part on the network node of the mobile communication network, especially the antenna entity or functionality, causes the computer and/or the user equipment and/or the network node of the mobile communication network, especially the antenna entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

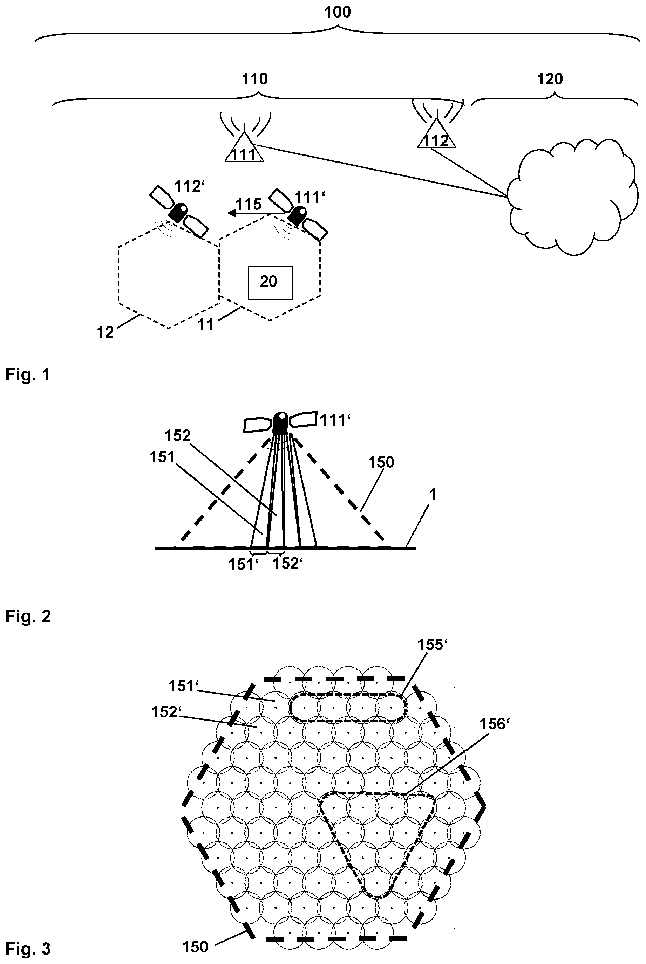

Figure 1 schematically illustrates the situation of a user equipment in a mobile communication network comprising a non-terrestrial network as its radio access network or, at least, as a part of its radio access network, wherein the user equipment is served by a base station entity (or by a plurality of base station entities), wherein the radio coverage is provided in different geographical areas during different time periods by means of an antenna entity or functionality (but preferably a plurality of antenna entities or functionalities) orbiting the earth and having a certain total field of view.
Figure 2 schematically illustrates the situation of the antenna entity or functionality being able to serve the user equipment, wherein the antenna entity or functionality realizes a plurality of different radio beams, each of these radio beams covering a specific part of the total field of view.
Figure 3 schematically illustrates a top view of the total field of view of an exemplary antenna entity or functionality that is able to serve a user equipment, or a plurality of user equipments, located within the total field of view, wherein schematically - besides the total field of view of the antenna entity or functionality - different specific parts of the total field of view, such specific parts being generated by different radio beams of the antenna entity or functionality are represented by small circles.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in (or connected to) a mobile communication network 100. The mobile communication network 100 comprises a non-terrestrial network as its radio access network 110 or, at least, as a part of its radio access network. The user equipment 20 is served by a base station entity 111 (or by a plurality of base station entities 111, 112). Radio coverage is provided, to the user equipment 20, in different geographical areas during different time periods by means of an antenna entity or functionality 111' (but preferably a plurality of antenna entities or functionalities 111', 112') orbiting the earth and having, each, a certain total field of view.

The first and second antenna entities or functionalities 111', 112', as represented in Figure 1, might be, respectively, part of the (first) base station entity 111 and of the second base station entity 112 (in which case the first and second base station entities 111, 112 are part of the different satellites); alternatively, the first and second antenna entities or functionalities 111', 112' might be (only) associated to the (first) base station entity 111 and/or to the second base station entity 112. In any case, by means of using the first and second antenna entities or functionalities 111', 112', the (first) base station entity 111 (and/or the second base station entity 112) serves or provides radio coverage to the user equipment 20.
The first antenna entity or functionality 111' is moving relative to the earth surface along a direction of movement which is schematically indicated by reference sign 115 in Figure 1. Likewise, the second antenna entity or functionality 112' is moving relative to the earth surface along a direction of movement (not specifically indicated in Figure 1).

In the exemplary representation shown in Figure 1, the mobile communication network 100 comprises, besides the access network 110, a core network 120. The mobile communication network 100 is preferably a cellular telecommunications network comprising typically a plurality of network cells (or radio cells). According to the present invention, the mobile communication network 100 comprises or uses or is associated or assigned to the radio access network 110, and the radio access network 110 (of the mobile communication network 100) comprises at least the base station entity 111, but typically a plurality of base station entities 111, 112. Figure 1 schematically and exemplarily shows the base station entities 111, 112 as a first base station entity 111 as well as a second base station entity 112.

The mobile communication network 100 (or telecommunications network 100) - or its (radio) access network 110 - is or at least comprises a non-terrestrial network in view of serving or providing radio coverage to the user equipment 20. E.g., the user equipment 20 is served by the (first) base station entity 111 being part of that non-terrestrial network.
An antenna entity or functionality 111' is also part of the non-terrestrial network or of the (radio) access network 110. The (first) antenna entity or functionality 111' is either a satellite-based antenna entity or functionality, or an antenna entity or functionality based on a high-altitude platform; however, the figures primarily show the alternative of a satellite-based antenna entity or functionality 111'. Figure 1 furthermore also shows another antenna entity or functionality 112' (or second antenna entity or functionality (112') that is - likewise preferably located aboard a satellite. However, in the context of the present invention, in case it is mentioned that the antenna entity or functionality 111' and/or the further antenna entity or functionality 112' is located aboard of, or part of, a satellite or a plurality of satellites, it is to be understood - if not explicitly or implicitly stated otherwise - that the first antenna entity or functionality 111' and/or the further antenna entity or functionality 112' might alternatively also be located aboard of, or as part of, a high-altitude platform or of a plurality of high-altitude platforms.
In Figure 1, it is primarily hinted at a transparent payload architecture of the non-terrestrial radio access network 110 (i.e. the base station entities 111, 112 - or the corresponding functionalities - are, rather, located on the ground, and, thus, not aboard the satellite or high altitude platform); however, the present invention also addresses or relates to (albeit not explicitly represented in the Figures) a non-terrestrial radio access network 110 having a regenerative payload architecture and/or having a regenerative base station entity-distributed unit payload architecture. Figure 1 furthermore schematically shows that radio coverage is provided in different geographical areas by different antenna entities or functionalities 111', 112': Typically, the antenna entities or functionalities 111', 112' more or less constantly have their respective field of view; however, they are orbiting the earth, and, thus, are able to provide radio coverage in different geographical areas during different time periods. For the point in time schematically shown in Figure 1, both antenna entities or functionalities 111', 112' are able to provide radio coverage to different (in this case rather adjacent) geographical areas. In the geographical areas for which an antenna entity or functionality 111', 112' is able to provide radio coverage, typically at least one radio cell is able to be generated; however, typically a plurality of radio cells is able to be generated by just one of the antenna entities or functionalities 111', 112' by means of the antenna entities or functionalities 111', 112' using, respectively, a plurality of different beams or radio beams.
Regarding one considered antenna entity or functionality 111', 112' all such radio beams taken together correspond to the total field of view of the respective antenna entity or functionality 111', 112'. Figure 1 schematically and exemplarily shows one radio cell 11 being generated by the (first) antenna entity or functionality 111' as well as a second radio cell 12 being generated by the further (or second) antenna entity or functionality 112'. Especially, the radio cells that are schematically shown in Figure 1 are able to be understood as corresponding to the total field of view, respectively, of the respective antenna entities or functionalities 111', 112', i.e. all radio beams of such antenna entities or functionalities 111', 112' would - in such a scenario - be combined to form one single radio cell, i.e. are transmitting one and the same (piece of) physical cell identity (information).

In Figure 2, a schematically illustrated 'side view' of a satellite or an antenna entity or functionality (exemplarily the (first) antenna entity or functionality 111') is represented (i.e. along a projection direction roughly perpendicular to the central beam of the antenna entity or functionality 111', i.e. roughly perpendicular to the direction defined by the satellite itself and the subsatellite point on the earth surface 1, i.e. the point below the satellite). The (first) antenna entity or functionality 111' is able to serve user equipments 20 (not shown in Figure 2) if such user equipments 20 are located within the total field of view 150 of the antenna entity or functionality 111'. Typically, the antenna entity or functionality 111' is (constantly) orbiting the earth; thus, having a certain total field of view 150 means that radio coverage is able to be provided in different geographical areas during different time periods.
Figure 2 hints at representing a plurality of different radio beams - exemplarily a first radio beam 151 and a second radio beam 152 -, wherein each of these radio beams is able to cover a specific part out of the total geographical area corresponding to the total field of view 150: In the exemplary representation of Figure 2, the first radio beam 151 covers a first specific part 151' of the total field of view 150 and the second radio beam 152 covers a second specific part 152' of the total field of view 150.

The different possibilities to combine radio beams 151, 152 of an antenna entity or functionality (such as the (first) antenna entity or functionality 111' or the further (or second) antenna entity or functionality 112') is schematically shown in Figure 3 which represents a top view of the total field of view 150 (especially a projection of the total field of view 150 onto a plane (especially a plane perpendicular to the direction defined by the satellite itself and the subsatellite point), rather than a curved surface such as the earth's surface) of an exemplary antenna entity or functionality 111', 112' that is able to provide radio coverage (and thereby serve, especially together with a respective base station entity 111, 112) to user equipments 20 (not represented in Figure 3), located within the total field of view 150. Besides the edge of the total field of view 150 of the antenna entity or functionality 111' (this edge being schematically represented, in Figure 3, by means of a bold dashed line), different specific parts 151', 152' of the total field of view 150 are schematically represented by small circles (each having a dot at its center). Such specific parts 151', 152' (for the sake of simplicity, only the first and second specific parts 151', 152' are indicated by means of reference signs) of the total field of view 150 are generated, respectively, by the different radio beams (exemplarily shown in Figure 2 by means of the first and the second radio beams 151, 152) of the antenna entity or functionality 111'.

According to the present invention, it is possible and preferred that the antenna entity or functionality 111' (and likewise also the further antenna entity or functionality 112') is able to be configured such that - regarding at least a first part of the radio beams - each one of the radio beams 151, 152 is able to transmit a different physical cell identity information in its specific part 151', 152' (at least compared, respectively, to the adjacent or neighboring radio beams); this results in the antenna entity or functionality 111' realizing smaller radio cells and an increased number thereof regarding the first part of the radio beams.
Furthermore, alternatively or cumulatively, the antenna entity or functionality 111' (and likewise also the further antenna entity or functionality 112') is able to be configured such that - regarding at least a second part of the radio beams - two or more radio beams are able to be grouped in order to transmit the same physical cell identity information in the combination of their contiguous specific parts of the total field of view 150; this results in the antenna entity or functionality 111' realizing larger radio cells and a smaller number thereof regarding the second part of the radio beams. Examples of such a second part of the of the radio beams are schematically shown in Figure 3: a first such contiguous specific part (comprising four radio beams that are linearly arranged, i.e. along a line, or forming a rectangle) is schematically hinted at by means of reference sign 155', whereas a second such contiguous specific part (comprising a total of ten radio beams that are arranged such as to form, exemplarily, a contiguous geographical area forming a triangle) is schematically hinted at by means of reference sign 156'. Of course, according to the present invention, other contiguous specific parts are possible, especially squares or rectangles, especially in a manner such that the longest extension of the contiguous specific part is (at least roughly) parallel to the direction of movement of the respective antenna entity or functionality 111', 112'.
According to the present invention, in order to provide radio coverage to different geographic areas (and corresponding user equipments 20 being located or moving there), the method comprises the step of operating the antenna entity or functionality 111' (and/or operating the further antenna entity or functionality 112') such that the definition of the first and second parts of the radio beams, and, regarding the second part of the radio beams also the group size, is dynamically adapted in dependency of the geographical area currently covered by the respective antenna entity or functionality 111', 112', i.e. their respective radio beams.

It is thereby advantageously possible, according to the present invention, that the configuration of the radio beams (or spot beams) and especially the configuration of the radio cells (resulting from such grouping or not grouping of radio beams) - each radio cell being operated such as to have an assigned (piece of) physical cell identity (information) that needs to be different compared to the (piece of) physical cell identity (information) of neighboring radio cells - is able to be chosen such that
-- a comparatively low capacity (requirements), or a low number of devices or user equipments, in a specific geographical area results in (or corresponds to or is met with) comparatively large resulting spot beams or a large grouping of spot beams, hence, to large radio cells (e.g. of the order of a diameter of 500 km to 1000 km instead of a diameter of 10 km to 50 km and/or resulting in other shapes than circles), and, thus, multiple individual standard spot beams are configured with the same physical cell identity PCI for a resulting larger single radio cell (e.g. 10 ..100 spot beams share the same PCI configuration and act as a very large single radio cell) - i.e. according to the second part of radio beams according to the inventive method -, whereas
-- a comparatively high capacity (requirements), or a high number of devices or user equipments, in a specific geographical area results in (or corresponds to or is met with) comparatively small resulting radio cells, up until individual spot beams - i.e. according to the first part of radio beams according to the inventive method - generating single radio cells.
Hence, according to the present invention, satellite spot beams are (or, rather, their configuration is) dynamically shaped - typically not by physical changes of the aperture of the antennas - but by combining multiple spot beams to jointly transmit as if these are provided by differently shaped antennas while jointly configured to the capacity and coverage needs in such geographical areas according to the above-mentioned principles.

Hence, according to the present invention, it is especially preferred that the antenna entity or functionalities 111', 112' are operated such that
-- a radio beam configuration - as well as a distribution of the physical cell identity information among different radio beams 151, 152 - according to the first part of the radio beams is applied above a geographical area requiring a comparatively high data transmission capacity and/or a comparatively high number of user equipments 20 to be served,
-- whereas a radio beam configuration - as well as a distribution of the physical cell identity information among different radio beams 151, 152 - according to the second part of the radio beams is applied above a geographical area requiring a lower data transmission capacity and/or a lower number of user equipments 20 to be served, wherein, especially, the group size of grouped radio beams 151, 152 increases the lower the data transmission capacity requirements are and/or the lower the number of user equipments 20 to be served within the respective geographical area.

Furthermore, it is especially preferred according to the present invention, that the antenna entity or functionality 111' comprises a first part and a second part, wherein the first part of the antenna entity or functionality 111' corresponds to or is located on a first satellite and the second part of the antenna entity or functionality 111' corresponds to or is located on a second satellite, wherein the first and second parts of the antenna entity or functionality 111' together realize the different radio beams 151, 152, wherein two or more radio beams, and at least one radio beam being generated by the first part of the antenna entity or functionality 111' and at least one radio beam being generated by the second part of the antenna entity or functionality 111' are grouped in order to transmit the same physical cell identity information in the combination of their respective specific parts of the total field of view.
Hence, it is thereby advantageously possible to realize a scenario where a mixed constellation of low earth orbit satellites and (one or a plurality of) medium or geostationary earth orbit satellite(s) is used to realize the same above-mentioned effect on efficiency and minimization: especially user equipment efforts to cope with frequent beam changes in sparsely used areas can be avoided by assigning the same PCI on the same frequency as for the low earth orbit satellite in those areas; thereby, the medium or geostationary earth orbit satellite(s) seamlessly takes over the multi-beam coverage provided by the low earth orbit satellite(s) without that the user equipment notifies this change and the transiting low earth orbit satellite(s) might simply be switched off while transiting through the large radio cell created by the medium earth orbit satellite.

## Claims

1. Method for providing radio coverage to user equipments (20) of or connected to a mobile
communication network (100) by means of a non-terrestrial antenna entity or functionality (111') being part of a radio access network (110) of the mobile communication network (100), wherein the radio coverage is provided in different geographical areas during different time periods by means of the antenna entity or functionality (111') orbiting the earth and having a certain total field of view (150),
wherein the antenna entity or functionality (111') realizes a plurality of different radio beams (151, 152), each of these radio beams (151, 152) covering a specific part (151', 152') of the total field of view (150), wherein the antenna entity or functionality (111') is configured to perform a logical cell formation task by distributing physical cell identity, PCI, information such that:
regarding at least a first part of the radio beams, each one of the radio beams (151, 152) transmits a different PCI in its specific part (151', 152') of the total field of view (150) at least compared, respectively, to its adjacent or neighboring radio beams (151, 152), resulting in the antenna entity or functionality (111') realizing smaller radio cells; and/or regarding at least a second part of the radio beams, two or more radio beams are grouped in order to transmit the same PCI in the combination of their contiguous specific parts (155', 156') of the total field of view (150), resulting in larger radio cells;
wherein in order to provide radio coverage to different geographic areas, the method comprises the step of operating the antenna entity or functionality (111') such that the definition of the first and second parts of the radio beams (151, 152), and,
the group size, is dynamically adapted in dependency of the geographical area currently covered by the respective radio beams (151, 152),
wherein the antenna entity or functionality (111') comprises a first part located on a first satellite and a second part located on a second satellite, wherein the first and second parts together realize the different radio beams (151, 152) by means of said logical cell formation task,
wherein at least one group of radio beams transmitting the same PCI comprises at least one beam generated by the first part and at least one beam generated by the second part,
wherein, regarding the second part of the radio beams, the radio beams are grouped such that a group of radio beams extends parallel to the direction of movement (115) of the first satellite relative to the earth's surface and, in a direction orthogonal to the direction of movement (115) of the first satellite, covers the entire width of the total field of view (150) of the antenna entity or functionality (111'),
wherein, with the movement of the first satellite above the earth, such groups of radio beams are progressively extended or enlarged, parallel to the direction of movement (115) of the first satellite, such as to provide radio coverage to a specific geographical area using a stationary PCI.

2. Method according to claim 1, wherein the antenna entity or functionality (111') is operated such that
a radio beam configuration according to the first part of the radio beams is applied above a geographical area requiring a comparatively high data transmission capacity or a comparatively high number of user equipments (20);
whereas a radio beam configuration according to the second part of the radio beams is applied above a geographical area requiring a lower data transmission capacity or a lower number of user equipments (20), wherein the group size of grouped radio beams (151, 152) increases the lower the data transmission capacity requirements are or the lower the number of user equipments (20).

3. Method according to one of the preceding claims, wherein, regarding the second part of the radio beams, the radio beams are grouped such that a group of radio beams extends parallel to the direction of movement (115) of the first satellite and, in the direction orthogonal to the direction of movement (115) of the first satellite, covers a first part of the total field of view (150) of the antenna entity or functionality (111'), and that at least one further group of radio beams also extends parallel to said direction of movement (115) and, in the direction orthogonal to the direction of movement (115) of the first satellite, covers a second part of the total field of view (150) of the antenna entity or functionality (111').

4. Method according to one of the preceding claims, wherein the radio coverage is provided using a regenerative payload deployment such that the antenna entity or functionality (111') comprises or is integrated with a base station entity (111) being part of the radio access network (110).

5. System (100) for providing radio coverage to user equipments (20) configured to perform the method according to any of claims 1 to 4.

6. Program comprising a computer readable program code, which, when executed on a computer and/or on a user equipment (20) and/or on a network node of a mobile communication network (100) or in part on a user equipment (20) and/or in part on the network node of the mobile communication network (100) causes the computer and/or the user equipment (20) and/or the network node of the mobile communication network (100) to perform a method according to one of claims 1 to 4.

7. Computer-readable medium comprising instructions which when executed on a computer and/or on a user equipment (20) and/or on a network node of a mobile communication network (100) or in part on a user equipment (20) and/or in part on the network node of the mobile communication network (100) causes the computer and/or the user equipment (20) and/or the network node of the mobile communication network (100) to perform a method according to one of claims 1 to 4.

## Patentansprüche

1. Verfahren zur Bereitstellung von Funkversorgung für Nutzergeräte (20) eines Mobilfunknetzes (100) oder mit einem Mobilfunknetz (100) verbundener Nutzergeräte (20) mittels einer nichtterrestrischen Antenneneinheit oder -funktionalität (111'), die Teil eines Funkzugangsnetzes (110) des Mobilfunknetzes (100) ist, wobei die Funkversorgung in verschiedenen geografischen Gebieten während verschiedener Zeitabschnitte durch die nichtterrestrische Antenneneinheit oder -funktionalität (111') bereitgestellt wird, die die Erde umkreist und ein bestimmtes gesamtes Sichtfeld (150) aufweist,
wobei die Antenneneinheit oder -funktionalität (111') eine Vielzahl verschiedener Funkstrahlen (151, 152) realisiert, von denen jeder einen bestimmten Teil (151', 152') des gesamten Sichtfeldes (150) abdeckt, wobei die Antenneneinheit oder -funktionalität (111') dazu ausgelegt ist, eine logische Zellbildungsaufgabe durchzuführen, indem sie Informationen zur physikalischen Zellidentität (PCI) derart verteilt, dass:
hinsichtlich mindestens eines ersten Teils der Funkstrahlen jeder der Funkstrahlen (151, 152) in seinem bestimmten Teil (151', 152') des gesamten Sichtfeldes (150) eine unterschiedliche PCI sendet, zumindest im Vergleich zu seinen benachbarten Funkstrahlen (151, 152), was dazu führt, dass die Antenneneinheit oder -funktionalität (111') kleinere Funkzellen realisiert; und/oder
hinsichtlich mindestens eines zweiten Teils der Funkstrahlen zwei oder mehr Funkstrahlen gruppiert werden, um dieselbe PCI in der Kombination ihrer zusammenhängenden bestimmten Teile (155', 156') des gesamten Sichtfeldes (150) zu senden, was zu größeren Funkzellen führt;
wobei das Verfahren, um Funkversorgung in verschiedenen geografischen Gebieten bereitzustellen, den Schritt des Betriebs der Antenneneinheit oder -funktionalität (111') umfasst, sodass die Definition des ersten und zweiten Teils der Funkstrahlen (151, 152) und die Gruppengröße in Abhängigkeit von dem geografischen Gebiet, das von den jeweiligen Funkstrahlen (151, 152) aktuell abgedeckt wird, dynamisch angepasst wird,
wobei die Antenneneinheit oder -funktionalität (111') einen ersten Teil, der sich auf einem ersten Satelliten befindet, und einen zweiten Teil umfasst, der sich auf einem zweiten Satelliten befindet, wobei der erste und der zweite Teil zusammen die verschiedenen Funkstrahlen (151, 152) mittels der logischen Zellbildungsaufgabe realisieren,
wobei mindestens eine Gruppe von Funkstrahlen, die dieselbe PCI senden, mindestens einen vom ersten Teil erzeugten Funkstrahl und mindestens einen vom zweiten Teil erzeugten Funkstrahl umfasst,
wobei hinsichtlich des zweiten Teils der Funkstrahlen die Funkstrahlen derart gruppiert sind, dass sich eine Gruppe von Funkstrahlen parallel zur Bewegungsrichtung (115) des ersten Satelliten relativ zur Erdoberfläche erstreckt und in einer zur Bewegungsrichtung (115) des ersten Satelliten senkrechten Richtung die gesamte Ausdehnung und Breite des gesamten Sichtfeldes (150) der Antenneneinheit oder -funktionalität (111') abdeckt,
wobei mit der Bewegung des ersten Satelliten über der Erde solche Gruppen von Funkstrahlen parallel zur Bewegungsrichtung (115) des ersten Satelliten schrittweise erweitert oder vergrößert werden, um einem bestimmten geografischen Gebiet unter Verwendung einer stationären PCI Funkversorgung bereitzustellen.

2. Verfahren nach Anspruch 1, wobei die Antenneneinheit oder -funktionalität (111') derart betrieben wird, dass:
eine Funkstrahl-Konfiguration gemäß dem ersten Teil der Funkstrahlen über einem geografischen Gebiet angewendet wird, das eine vergleichsweise hohe Datenübertragungskapazität oder eine vergleichsweise hohe Anzahl von Nutzergeräten (20) erfordert;
wohingegen eine Funkstrahl-Konfiguration gemäß dem zweiten Teil der Funkstrahlen über einem geografischen Gebiet angewendet wird, das eine geringere Datenübertragungskapazität oder eine geringere Anzahl von Nutzergeräten (20) erfordert, wobei die Gruppengröße der gruppierten Funkstrahlen (151, 152) umso größer ist, je geringer die Anforderungen an die Datenübertragungskapazität oder je geringer die Anzahl der Nutzergeräte (20) ist.

3. Verfahren nach einem der vorhergehenden Ansprüche, wobei hinsichtlich des zweiten Teils der Funkstrahlen die Funkstrahlen derart gruppiert sind, dass sich eine Gruppe von Funkstrahlen parallel zur Bewegungsrichtung (115) des ersten Satelliten erstreckt und in der zur Bewegungsrichtung (115) des ersten Satelliten senkrechten Richtung einen ersten Teil des gesamten Sichtfeldes (150) der Antenneneinheit oder -funktionalität (111') abdeckt, und dass mindestens eine weitere Gruppe von Funkstrahlen sich ebenfalls parallel zur genannten Bewegungsrichtung (115) erstreckt und in der zur Bewegungsrichtung (115) des ersten Satelliten senkrechten Richtung einen zweiten Teil des gesamten Sichtfeldes (150) der Antenneneinheit oder -funktionalität (111') abdeckt.

4. Verfahren nach einem der vorhergehenden Ansprüche, wobei die Funkversorgung unter Verwendung einer regenerativen Nutzlastarchitektur bereitgestellt wird, sodass die Antenneneinheit oder -funktionalität (111') eine Basisstationseinheit (111) umfasst oder in diese integriert ist, die Teil des Funkzugangsnetzes (110) ist.

5. System (100) zur Bereitstellung von Funkversorgung für Nutzergeräte (20), das dazu ausgelegt ist, das Verfahren nach einem der Ansprüche 1 bis 4 durchzuführen.

6. Programm, das einen computerlesbaren Programmcode umfasst, der, wenn er auf einem Computer und/oder auf einem Nutzergerät (20) und/oder auf einem Netzwerkknoten eines Mobilfunknetzes (100) oder teilweise auf einem Nutzergerät (20) und/oder teilweise auf dem Netzwerkknoten des Mobilfunknetzes (100) ausgeführt wird, den Computer und/oder das Nutzergerät (20) und/oder den Netzwerkknoten des Mobilfunknetzes (100) veranlasst, ein Verfahren nach einem der Ansprüche 1 bis 4 durchzuführen.

7. Computerlesbares Medium, das Anweisungen umfasst, die, wenn sie auf einem Computer und/oder auf einem Nutzergerät (20) und/oder auf einem Netzwerkknoten eines Mobilfunknetzes (100) oder teilweise auf einem Nutzergerät (20) und/oder teilweise auf dem Netzwerkknoten des Mobilfunknetzes (100) ausgeführt werden, den Computer und/oder das Nutzergerät (20) und/oder den Netzwerkknoten des Mobilfunknetzes (100) veranlassen, ein Verfahren nach einem der Ansprüche 1 bis 4 durchzuführen.

## Revendications

1. Procédé de fourniture d'une couverture radio à des équipements utilisateurs (20) d'un réseau de communication mobile (100) ou connectés à un réseau de communication mobile (100), au moyen d'une entité d'antenne non terrestre ou d'une fonctionnalité d'antenne non terrestre (111') faisant partie d'un réseau d'accès radio (110) du réseau de communication mobile (100), dans lequel la couverture radio est fournie dans différentes zones géographiques pendant différentes périodes de temps au moyen de l'entité d'antenne ou de la fonctionnalité d'antenne (111') qui orbite autour de la Terre et possède un certain champ de vision total (150),
dans lequel l'entité d'antenne ou la fonctionnalité d'antenne (111') réalise une pluralité de différents faisceaux radio (151, 152), chacun de ces faisceaux radio (151, 152) couvrant une partie spécifique (151', 152') du champ de vision total (150), dans lequel l'entité d'antenne ou la fonctionnalité d'antenne (111') est configurée pour effectuer une tâche de formation de cellule logique en distribuant des informations d'identité de cellule physique (PCI) de telle sorte que :
en ce qui concerne au moins une première partie des faisceaux radio, chacun des faisceaux radio (151, 152) transmet une PCI différente dans sa partie spécifique (151', 152') du champ de vision total (150), au moins par rapport à ses faisceaux radio adjacents ou voisins (151, 152), ce qui a pour résultat que l'entité d'antenne ou la fonctionnalité d'antenne (111') réalise des cellules radio plus petites ; et/ou
en ce qui concerne au moins une deuxième partie des faisceaux radio, deux ou plusieurs faisceaux radio sont regroupés afin de transmettre la même PCI dans la combinaison de leurs parties spécifiques contiguës (155', 156') du champ de vision total (150), ce qui a pour résultat des cellules radio plus grandes ;
dans lequel, afin de fournir une couverture radio à différentes zones géographiques, le procédé comprend l'étape consistant à faire fonctionner l'entité d'antenne ou la fonctionnalité d'antenne (111') de telle sorte que la définition des première et deuxième parties des faisceaux radio (151, 152) et la taille de groupe sont adaptées dynamiquement en fonction de la zone géographique actuellement couverte par les faisceaux radio (151, 152) respectifs,
dans lequel l'entité d'antenne ou la fonctionnalité d'antenne (111') comprend une première partie située sur un premier satellite et une deuxième partie située sur un deuxième satellite, dans lequel les première et deuxième parties réalisent ensemble les différents faisceaux radio (151, 152) au moyen de ladite tâche de formation de cellule logique,
dans lequel au moins un groupe de faisceaux radio transmettant la même PCI comprend au moins un faisceau généré par la première partie et au moins un faisceau généré par la deuxième partie,
dans lequel, en ce qui concerne la deuxième partie des faisceaux radio, les faisceaux radio sont regroupés de telle sorte qu'un groupe de faisceaux radio s'étend parallèlement à la direction de déplacement (115) du premier satellite par rapport à la surface terrestre et, dans une direction orthogonale à la direction de déplacement (115) du premier satellite, couvre la largeur totale du champ de vision total (150) de l'entité d'antenne ou de la fonctionnalité d'antenne (111'),
dans lequel, avec le déplacement du premier satellite au-dessus de la Terre, ces groupes de faisceaux radio sont progressivement étendus ou agrandis, parallèlement à la direction de déplacement (115) du premier satellite, de manière à fournir une couverture radio à une zone géographique spécifique à l'aide d'une PCI fixe.

2. Procédé selon la revendication 1, dans lequel l'entité d'antenne ou la fonctionnalité d'antenne (111') est exploitée de telle sorte que :
une configuration de faisceaux radio selon la première partie des faisceaux radio est appliquée au-dessus d'une zone géographique nécessitant une capacité de transmission de données comparativement élevée ou un nombre comparativement élevé d'équipements utilisateurs (20) ;
tandis qu'une configuration de faisceaux radio selon la deuxième partie des faisceaux radio est appliquée au-dessus d'une zone géographique nécessitant une capacité de transmission de données moins élevée ou un nombre moins élevé d'équipements utilisateurs (20), dans lequel la taille de groupe des faisceaux radio regroupés (151, 152) augmente à mesure que les exigences en matière de capacité de transmission de données diminuent ou que le nombre d'équipements utilisateurs (20) diminue.

3. Procédé selon l'une des revendications précédentes, dans lequel, en ce qui concerne la deuxième partie des faisceaux radio, les faisceaux radio sont regroupés de telle sorte qu'un groupe de faisceaux radio s'étend parallèlement à la direction de déplacement (115) du premier satellite et, dans la direction orthogonale à la direction de déplacement (115) du premier satellite, couvre une première partie du champ de vision total (150) de l'entité d'antenne ou de la fonctionnalité d'antenne (111'), et qu'au moins un autre groupe de faisceaux radio s'étend également parallèlement à ladite direction de déplacement (115) et, dans la direction orthogonale à la direction de déplacement (115) du premier satellite, couvre une deuxième partie du champ de vision total (150) de l'entité d'antenne ou de la fonctionnalité d'antenne (111').

4. Procédé selon l'une des revendications précédentes, dans lequel la couverture radio est fournie en utilisant un déploiement de charge utile régénérative, de sorte que l'entité d'antenne ou la fonctionnalité d'antenne (111') comprend une entité de station de base (111) ou est intégrée dans une entité de station de base (111) faisant partie du réseau d'accès radio (110).

5. Système (100) de fourniture d'une couverture radio à des équipements utilisateurs (20) configuré pour mettre en œuvre le procédé selon l'une des revendications 1 à 4.

6. Programme comprenant un code de programme lisible par ordinateur qui, lorsqu'il est exécuté sur un ordinateur et/ou sur un équipement utilisateur (20) et/ou sur un nœud de réseau d'un réseau de communication mobile (100), ou en partie sur un équipement utilisateur (20) et/ou en partie sur le nœud de réseau du réseau de communication mobile (100), amène l'ordinateur et/ou l'équipement utilisateur (20) et/ou le nœud de réseau du réseau de communication mobile (100) à mettre en œuvre un procédé selon l'une des revendications 1 à 4.

7. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100), ou en partie sur un équipement utilisateur (20) et/ou en partie sur le nœud de réseau du réseau de communication mobile (100), amènent l'ordinateur et/ou l'équipement utilisateur (20) et/ou le nœud de réseau du réseau de communication mobile (100) à mettre en œuvre un procédé selon l'une des revendications 1 à 4.
